**Europäisches Patentamt**

**European Patent Office**

**Office européen des brevets**

(19)

(11) Veröffentlichungsnummer: **0 143 913**

**A2**

(12) # EUROPÄISCHE PATENTANMELDUNG

(21) Anmeldenummer: **84110526.5**

(22) Anmeldetag: **04.09.84**

(51) Int. Cl.⁴: **C 05 F 13/00**
**C 05 G 1/00**

(30) Priorität: **20.09.83 DE 3333956**
**05.10.83 DE 3336249**

(43) Veröffentlichungstag der Anmeldung:
**12.06.85 Patentblatt 85/24**

(84) Benannte Vertragsstaaten:
**AT BE CH FR GB IT LI LU NL SE**

(71) Anmelder: **Folab i katrineholm AB**
**Postgatan 2**
**S-64 145 Katrineholm(SE)**

(72) Erfinder: **Öbrink, Karl Bertil**
**Remnavägen 30**
**S-64 135 Katrineholm(SE)**

(72) Erfinder: **Wästerlund, Iwan**
**Backgardsvägen 6**
**S-77 073 Garpenberg(SE)**

(72) Erfinder: **Öbrink, Thomas**
**Remnavägen 30**
**S-64 135 Katrineholm(SE)**

(74) Vertreter: **Popp, Eugen, Dr. et al,**
**MEISSNER, BOLTE & PARTNER Postfach 86 06 24**
**D-8000 München 86(DE)**

(54) **Material zur Wachstumsförderung, Verfahren zur Herstellung eines derartigen Materials und Verwendung von Materialien dieser Art.**

(57) Es werden ein Material zur Wachstumsförderung, insbesondere von Erden oder Böden, ein Verfahren zur Herstellung eines derartigen Materials sowie die Verwendung von Materialien dieser Art angegeben. Das Material enthält gegebenenfalls mehrfach kompostierte Baumrinde bzw. Baumrindenstücke als Substrat sowie Düngemittel, vorzugsweise natürliche Düngemittel, insbesondere tierischen Kot. Besonders ist hierfür Hühnerkot, vorzugsweise samenarmer Kükenkot, geeignet, der dem zerkleinerten, kompostierten Baumrindensubstrat zugegeben wird. Unter Zugabe von geeigneten Zuschlagstoffen und Bindemitteln lassen sich daraus Formkörper herstellen, die als Grasplatte, Abdeckplatte mit Düngeeffekt, Nährkörper oder Samenkörper geeignet sind.

EP 0 143 913 A2

# POPP, SAJDA, v. BÜLOW, HRABAL & PARTNER

Patentanwälte · European Patent Attorneys
München · Bremen*

**0143913**

Popp, Sajda, v. Bülow, Hrabal & Partner, Postfach 86 06 24, D-8000 München 86

Dr. Eugen Popp Dipl.-Ing., Dipl.-Wirtsch.-Ing.
Wolf E. Sajda Dipl.-Phys.
Dr. Tam v. Bülow Dipl.-Ing., Dipl.-Wirtsch.-Ing.
Dr. Ulrich Hrabal Dipl.-Chem.
Erich Bolte Dipl.-Ing.*

BÜRO MÜNCHEN/MUNICH OFFICE:
Widenmayerstraße 48
Postfach/P.O. Box 86 06 24
D-8000 München 86
Telefon: (089) 22 26 31
Telex: 5 213 222 epo d
Telekopierer: (089) 22 17 21

Folab i Katrineholm AB
Postgatan 2

S-64 145 Katrineholm
Schweden

| Ihr Zeichen<br>Your ref. | Ihr Schreiben vom<br>Your letter of | Unser Zeichen<br>Our ref. | |
|---|---|---|---|
| | | M/ANR-60-EP | 04. September 1984 Sj/sz |

---

Material zur Wachstumsförderung, Verfahren zur Herstellung
eines derartigen Materials und Verwendung von Materialien
dieser Art

---

### Beschreibung

Die Erfindung betrifft Materialien zur Wachstumsförderung,
Verfahren zur Herstellung von derartigen Materialien sowie
die Verwendung von Materialien dieser Art.

Insbesondere betrifft die Erfindung Materialien zur Wachstumsförderung im Boden, d.h. zur Wachstumsförderung von
beispielsweise Bäumen, Büschen, Sträuchern, Rasen, Wiesen,
Zierpflanzen und Nutzpflanzen aller Art. Bisher hat man
zu diesem Zweck dem Boden bzw. der Erde vielfach künstliche Düngemittel oder sogenannten Kunstdünger hinzugesetzt, wobei eine derartige Beimischung von künstlichen
Düngemitteln zu einer kräftigen Erhöhung des Salzgehaltes und damit zur Wachstumsverhinderung führen kann. Gleichzeitig kommt es dabei zur Immobilisierung des Stickstoffgehaltes und damit zu Stickstoffmangel wegen eines Überganges von einer organischen zur anorganischen Bindung.

Außerdem kommt es bei der Verwendung von künstlichen Düngemitteln, wo man praktisch keine Dosierung vornehmen kann, zu einer momentanen Überdüngung sowie einer Abführung oder Abdrainierung des Überschusses in das Grundwasser und die Gewässer, was wiederum schwere Umweltschäden zur Folge hat.

Aufgabe der Erfindung ist es daher, ein verbessertes Material zur Wachstumsförderung, insbesondere in Böden oder Erden, zu schaffen, das sich durch hohe Wirksamkeit auszeichnet und zugleich keine Umweltschäden hervorruft.

Die erfindungsgemäße Lösung besteht darin, daß das Material zur Wachstumsförderung kompostierte Baumrinde bzw. Baumrindenstücke als Substrat und **Düngemittel**, vorzugsweise natürliche Düngemittel, insbesondere tierischen Kot, enthält.

Dabei wird in vorteilhafter Weise kompostiertes Rindenmaterial oder Borke von Nadelbäumen, wie z.B. Kiefer, Tanne, Fichte, aber auch von Laubbäumen verwendet. Die Kompostierung führt dabei zum totalen Zerfall der Innenrinde, d.h. des Bastes, sowie zur vollständigen Auflösung der äußeren Rindenstruktur. Dabei können in vorteilhafter Weise auch alte Rindenbestände verwendet werden, die an den Arbeitsplätzen der Waldarbeiter anzutreffen sind, welche die gefällten Bäume entrinden, bevor die gesäuberten Stämme abtransportiert werden. Weiterhin können vorteilhafterweise solche alten Rindenbestände verwendet werden, die in der Nähe von Sägewerken oder dergl. anzutreffen sind. Es darf darauf hingewiesen werden, daß die besten Resultate erzielt werden, wenn derartige Baumrinde bzw. Baumrindenstücke einer Doppelkompostierung unterworfen werden.

Bei dem erfindungsgemäßen Material zur Wachstumsförderung wird in vorteilhafter Weise ausgenutzt, daß die Baumrinde bzw. die Baumrindenstücke in hohem Maße die Eigenschaft besitzen, sowohl Wasser als auch Nährstoffe zurückzuhalten und den Boden vor Auslaugung und Austrocknung zu schützen. Es hat sich gezeigt, daß der Zusatz von natürlichen Düngemitteln zu kompostierter Baumrinde die Gefahr der Salzbildung im Boden stark verringert, so daß Umweltschäden auf diese Weise vermieden werden.

Vorzugsweise sind die Baumrinde bzw. die Baumrindenstücke beim erfindungsgemäßen Material zerkleinert, vorzugsweise zerhackt, zerschnitzelt bzw. zerrieben und bilden auf diese Weise ein Baumrindensubstrat, das eine gute Kompostierung und gleichmäßige Vermischung mit den/natürlichen Düngemitteln ermöglicht.
vorzugsweise

In Weiterbildung der Erfindung ist vorgesehen, daß das kompostierte Baumrindensubstrat mit den Düngemitteln etwa gleichmäßig vermengt oder vermischt und zu einem Körper vorgegebener Gestalt verpreßt ist.

Besonders vorteilhaft ist es, wenn die Baumrinde bzw. die Baumrindenstücke mindestens zweifach kompostiert sind.

In Weiterbildung des erfindungsgemäßen Materials ist vorgesehen, daß es zusätzlich Kalk und phytophile, zumindest phytoneutrale Bindemittel enthält. Als weiterer Bestandteil kann zweckmäßigerweise Mineralwolle, insbesondere Steinwolle oder Schlackenwolle in feinen Fraktionen verwendet werden.

Besonders vorteilhaft ist es, wenn als tierischer Kot Hühnerkot, vorzugsweise samenarmer Kükenkot, zugemischt ist. Derartiger Hühnerkot oder Hühnermist, der gemahlener und kompostierter Rinde zugesetzt bzw. mit dieser vermischt worden ist, hat sich als besonders wirksam erwiesen. Besonders geeignet ist der Hühnerkot bzw. Hühnermist von solchen Farmen, die Schlachthähnchen aufziehen, da derartiger Hühnerkot frei von Unkrautsamen ist.

Dabei kann die kompostierte und fein zerteilte Rinde in vorteilhafter Weise als Streu in der Hühnerfarm verwendet werden, wobei man innerhalb eines gewissen Zeitraumes mehrere Schichten von derartiger Rinde ausstreut. Es darf darauf hingewiesen werden, daß derartige Rinde als Streu von den Tieren bedeutend besser vertragen wird, als etwa Torf, Stroh oder dergl. Dabei wird der Mist, d.h. der tierische Kot, der Rindenschicht nacheinander zugeführt, d.h. über einen längeren Zeitraum in geringen Mengen, so daß der Mist und seine Nahrungsbestandteile in wirksamer Weise absorbiert werden.

Die kompostierte Rinde, der die natürlichen Düngemittel zugemischt worden sind, kann beispielsweise auf Korngrößen von etwa 8 mm abgesiebt und der Erde beigemischt werden. Gleichzeitig kann dem erhaltenen Material weitere kompostierte, aber nicht mit Düngemitteln versehene Rinde beigemischt werden. Auf diese Weise läßt sich das Material strecken, insbesondere in den Fällen, wo sich herausstellt, daß das von den (Hühner-)Farmen kommende Material bzw. die angereichte Streu, viel zu nahrungsreich ist.

Besonders vorteilhaft ist es, wenn man dem Material als Bindemittel Polyvinylacetat, Lignin, Abfallauge von der Celluloseherstellung, Stärke, Kaseinat und/oder Natriumsilikat bzw. Wasserglas beimischt.

Bei einer Ausführungsform hat das erfindungsgemäße Material folgende Zusammensetzung:

| | |
|---|---|
| Kompostierte Rinde | 50 - 90 Vol.-%, vorzugsweise etwa 75 Vol.-% |
| Tierischer Kot | 45 - 7 Vol.-%, vorzugsweise etwa 15 Vol.-% |
| Kalk und Bindemittel | Rest mit etwa 7 Vol.-%. |

Bei einer speziellen Ausführungsform besitzt das erfindungsgemäße Material folgende Zusammensetzung:

| | |
|---|---|
| Reine kompostierte Rinde | 50 - 90 Vol.-% |
| Mit Düngemittel (auch künstlichen), insbesondere Kot angereicherte Rinde | 45 - 5 Vol.-% |
| Kalk und Bindemittel | Rest von etwa 5 - 10 Vol.-%. |

Gemäß der Erfindung wird die Zusammensetzung des Materials von kompostierter Baumrinde und Düngemittel (auch künstlichem), vorzugsweise tierischem Kot so gewählt, daß der Stickstoffgehalt (N-Gehalt) etwa 1,2 bis 2,8 %, vorzugsweise 1,5 bis 2,3 % beträgt.

In Weiterbildung des erfindungsgemäßen Materials können dem Substrat Fasermasseabfälle, z.B. Cellulosenfasern in feinen Fraktionen, zugemischt sein, deren Menge 25 bis 45 Vol.-% des Substrates ausmacht. Derartige Cellulosefasern fallen bei den verschiedensten Herstellungsprozeßen als Abfall an, beispielsweise in großen Mengen bei der Sulfat- und Sulfitherstellung. Derartige Cellulosefasern haben die vorteilhafte Eigenschaft, daß sie ein zusätzliches Bindemittel darstellen, Nahrungsstoffe enthalten sowie das spezifische Gewicht von Formkörpern herabsetzen, die aus derartigem Material hergestellt werden.

Sofern Baumrinde nicht oder nicht in ausreichendem Maße zur Verfügung steht, kann die Baumrinde im Substrat zumindest teilweise durch Torf ersetzt sein, auch wenn seine Eigenschaften nicht so gut wie die von Baumrinde sind.

Das Verfahren zur Herstellung von Material zur Wachstumsförderung, insbesondere in Erden oder Böden, zeichnet sich durch folgende Verfahrensschritte aus:

- Kompostieren, gegebenenfalls mehrfaches Kompostieren von Baumrinden von einer oder mehreren Gattungen, d.h. von Rinden von Laub- und/oder Nadelbäumen verschiedener Art,
- Zerkleinern der kompostierten Baumrinden zu einem Baumrindensubstrat und
- etwa gleichmäßiges Vermengen oder Vermischen des Baumrindensubstrats mit Düngemittel, insbesondere tierischem Kot, vorzugsweise samenarmem Hühnerkot.

In Weiterbildung des erfindungsgemäßen Verfahrens ist vorgesehen, daß weitere Zusätze, wie z.B.
- Kalk
- phytophile, zumindest phytoneutrale Bindemittel und gegebenenfalls
- Mineralwolle oder faserige Mineralstoffe, z.B. Mineralwollabfälle in feinen Fraktionen zugemengt werden.

Bei einem speziellen Ausführungsbeispiel des erfindungsgemäßen Verfahrens werden etwa 50 bis 90 Vol.-%, vorzugsweise etwa 75 Vol.-% kompostierte Rinde, 45 bis 7 Vol.-%, vorzugsweise etwa 15 Vol.-% tierischer Kot, insbesondere Hühnerkot, und ein Rest von ca. 7 Vol.-% an Kalk und Bindemitteln miteinander vermischt.

In Weiterbildung des erfindungsgemäßen Verfahrens ist vorgesehen, daß 50 bis 90 Vol.-% reine kompostierte

0143913

Rinde, 45 bis 5 Vol.-% mit Kot angereicherte Rinde und ein Rest von etwa 5 bis 10 Vol.-% an Kalk und Bindemitteln miteinander vermengt werden.

Das erfindungsgemäße Verfahren kann zweckmäßigerweise so durchgeführt werden, daß das kompostierte Baumrindensubstrat zunächst in trockenem Zustand als Streu in einem Tierstall oder Tierkäfig verteilt wird und daß das Substrat nach ausreichender Bedeckung oder Beschichtung mit Kot und Einwirkung des Kotes wieder gesammelt und mit reinem bzw. kotfreiem Baumrindensubstrat vorzugsweise in einem vorstehend genannten Mengenverhältnis vermischt wird.

Dabei erweist es sich als vorteilhaft, wenn die Streuung von Baumrindensubstrat und Bedeckung mit Kot nacheinander in mehreren Schichten durchgeführt wird. Auf diese Weise wird eine besonders gute Durchmischung und Anreicherung des Materials mit Nährstoffen erreicht, so daß derartiges Material besonders gut zur Verbesserung der Boden- und Erdqualität geeignet ist.

Es erweist sich als vorteilhaft, die Einwirkung des tierischen Kotes auf das beim Einstreuen oder Vermischen trockene Baumrindensubstrat bei einer Teilchengröße des Substrats von vorzugsweise 5 bis 10 mm etwa 3 bis 5 Wochen dauern zu lassen. Damit wird besonders hochwertiges Material hergestellt.

In Weiterbildung des erfindungsgemäßen Verfahrens ist vorgesehen, daß das Material zu einem beständigen Formkörper vorgegebener Gestalt verpreßt wird, vorzugsweise unter Einwirkung eines Druckes von etwa 100 bis 5000 kPa, so daß der Formkörper eine Dichte von etwa 600 bis 900 kg/m³ aufweist.

Es erweist sich als zweckmäßig, beispielsweise flächige Formkörper in Form von Platten oder dergl. herzustellen und deren Oberfläche mit Pflanzensamen, insbesondere Grassamen zu besetzen oder zu versehen.

Bei einer anderen Ausführungsform des Verfahrens werden in das Innere von kubischen, insbesondere kugelförmigen oder eiförmigen Formkörpern ein oder mehrere Samenkörner, insbesondere Baum-, Busch- oder andere Pflanzensamenkörner unter Bildung von Samenkörpern eingeschlossen.

Unter Verwendung des vorstehend beschriebenen Verfahrens sowie der oben angegebenen Zusammensetzungen können gemäß der Erfindung die verschiedensten Formkörper hergestellt werden, die etwa folgende Gestalt haben
- geschlossene oder mit einer oder mehreren Ausnehmungen oder Durchbrüchen versehene Platten
- Würfel
- Kugeln oder eiförmige Gebilde
- Pyramiden oder Kegel
- Sterne oder
- andere Formkörper mit beliebiger geometrischer Gestalt.

Formkörper dieser Art können beispielsweise verwendet werden als Grasplatte, Abdeckplatte mit Düngeeffekt, Nährkörper, Düngeelement, Pflanzkörper oder Samenkörper.

Insbesondere können Materialien und Formkörper der vorstehend genannten Art zur Verbesserung der Bodenqualität, insbesondere zur Langzeitdüngung eingesetzt werden.

Das Material und die daraus hergestellten Formkörper gemäß der Erfindung haben die vorteilhafte Eigenschaft, daß sie dem Boden neue wertvolle Substanzen zuführen, dadurch die Erd- und Bodenqualität verbessern, eine Versteppung und Verarmung des Bodens verhindern sowie den Boden vor Austrocknung schützen, da das Material die Feuchtigkeit festhält.

Im einfachsten Falle wird das erfindungsgemäße Material als Erde, z.B. Gartenerde, in losem Zustand verwendet und enthält das kompostierte Baumrindensubstrat, das mit Düngemittel (auch künstlichem), vorzugsweise tierischem Kot, insbesondere Hühnerkot, versetzt ist, sowie feine Teilchen von Mineralwollabfällen, die frei von Kunststoff sind, sowie Landwirtschaftskalk.

Grünflächen- oder Grasplatten stellen einen speziellen Anwendungsfall der erfindungsgemäßen Formkörper dar. Sie bestehen aus dem gegebenenfalls mehrfach kompostierten und mit Düngemittel, vorzugsweise Mist bzw. tierischem Kot versetzten Baumrindensubstrat sowie Zusätzen von Mineralwollabfällen in feinen Fraktionen, Kalk sowie pflanzenfreundlichen Bindemitteln. Dieses nicht grobkörnige Material wird in relativ dicken Schichten ausgestreut, auf die Oberfläche dieses Materials Grassamen gestreut und dann zu relativ dünnen Platten verpreßt. Die so hergestellten Platten können zur Herstellung von Grünflächen einfach auf den Boden, gegebenenfalls sogar auf Sandboden gelegt werden, um beispielsweise Gärten, Grünflächen, Golfbahnen, Tennisplätze oder dergl. anzulegen.

Abdeckplatten stellen eine weitere Verwendungsmöglichkeit des erfindungsgemäßen Materials dar, wobei diese ähnlich aufgebaut und hergestellt sind wie die oben erwähnten Grünflächenplatten, jedoch keine Grassamen enthalten. Derartige Abdeckplatten können in verschiedenster Größe verwendet und mit runden und/oder kantigen Aussparungen in ihrem mittleren Bereich versehen sein, so daß sie um Pflanzen, wie z.B. Bäume oder Büsche herumgelegt werden können. Diese Abdeckplatten haben die Eigenschaft, daß sie ihre Nährstoffe langsam abgeben, den Boden vor Austrocknung schützen sowie die Unkrautbildung verhindern. Solche Abdeckplatten aus dem erfindungsgemäßen Material sind beispielsweise besonders für Rosen, Erdbeeren und Ziersträucher geeignet.

Ferner können aus dem Material und den Formkörpern gemäß der Erfindung Düngungssterne hergestellt werden, d.h. aus den oben beschriebenen Platten werden Formkörper in Sternform ausgestanzt und mit einer oder mehreren sich über die Oberfläche des jeweiligen Sternstrahles erstreckenden Vertiefungen zur Wasserabsorption versehen, um eine raschere Auflösung des Körpers zu ermöglichen. Solche Formkörper können auf oder in die Erde von Topfpflanzen oder dergl. gelegt werden und lassen sich überall dort anwenden, wo andere Formkörper zu großflächig sind. Solche, die Erdqualität verbessernden Formkörper können insbesondere bei wertvollen Pflanzen sehr wichtig sein.

Von besonderer Bedeutung sind Samenkörper oder Pflanzkörper, d.h. zu Kugeln oder eiförmigen Körpern verpreßtes Material gemäß der Erfindung, das keine Grassamen enthält. Die jeweiligen Samenkugeln, Samenkörper oder dergl. enthalten in ihrem Inneren ein oder mehrere Samenkörner, insbesondere von Bäumen, Büschen oder dergl. Solche Samenkörper können gegebenenfalls auch maschinell mit vorgegebenem Abstand ausgepflanzt oder auch nur verstreut werden, beispielsweise sogar vom Flugzeug aus. Dabei hat die "Schale" aus dem erfindungsgemäßen Material die Funktion einer erforderlichen Nahrungsreserve bei der Entwicklung der Pflanzen, d.h. jede Pflanze besitzt ihr eigenes, mitgebrachtes Nahrungspolster, so daß der Boden von den auf diese Weise eingepflanzten Pflanzen nicht mehr ausgelaugt wird, vielmehr wird der Boden durch die Anwendung derartiger Formkörper aus dem erfindungsgemäßen Material zunehmend verbessert, insbesondere bei der Anwendung des Materials über längere Zeiträume.

Die Pflanz- oder Samenkörper gemäß der Erfindung bestehen dabei in der Regel aus dem kompostierten Baumrindensubstrat unter Zusatz von tierischem Kot, vorzugsweise Hühnerkot, Kalk, gegebenenfalls Torf, Cellulose- und/oder Mineralwollfasern in feinen Fraktionen, wobei diese Körper zweckmäßigerweise eine Größe von 6 bis 30 mm haben.

Zweckmäßigerweise wird das erfindungsgemäße Material, insbesondere die erfindungsgemäßen Formkörper mit Insektiziden und Fungiziden versetzt, so daß von vorneherein eine gezielte lokale, d. h. umweltfreundliche Schädlings- etc. -Bekämpfung gewährleistet ist.

Abschließend sei nochmals betont, daß es von Wichtigkeit ist, kompostierte Baumrinde zu verwenden. Diese gewährleistet im Vergleich zu Sägespänen oder Holzmehl ein weit besseres Wachstum.

## POPP, SAJDA, v. BÜLOW, HRABAL & PARTNER

Patentanwälte · European Patent Attorneys
München · Bremen*

0143913

Popp, Sajda, v. Bülow, Hrabal & Partner, Postfach 86 06 24, D-8000 München 86

Dr. Eugen Popp Dipl.-Ing., Dipl.-Wirtsch.-Ing.
Wolf E. Sajda Dipl.-Phys.
Dr. Tam v. Bülow Dipl.-Ing., Dipl.-Wirtsch.-Ing.
Dr. Ulrich Hrabal Dipl.-Chem.
Erich Bolte Dipl.-Ing.*

BÜRO MÜNCHEN/MUNICH OFFICE:
Widenmayerstraße 48
Postfach/P.O. Box 86 06 24
D-8000 München 86
Telefon: (089) 22 26 31
Telex: 5 213 222 epo d
Telekopierer: (089) 22 17 21

Folab i Katrineholm AB
Postgatan 2

S-64 145 Katrineholm
Schweden

| Ihr Zeichen<br>Your ref. | Ihr Schreiben vom<br>Your letter of | Unser Zeichen<br>Our ref. |
| --- | --- | --- |

M/ANR-60-EP          04. September 1984 Sj/s

---

Material zur Wachstumsförderung, Verfahren zur Herstellung
eines derartigen Materials und Verwendung von Materialien
dieser Art

---

## Patentansprüche

1. Material zur Wachstumsförderung, enthaltend kompostierte
Baumrinde bzw. Baumrindenstücke als Substrat und Düngemittel,
vorzugsweise natürliche Düngemittel, insbesondere tierischen Kot.

2. Material nach Anspruch 1, dadurch g e k e n n z e i c h -
n e t , daß die Baumrinde bzw. die Baumrindenstücke zerkleinert, vorzugsweise zerhackt, zerschnitzelt bzw. zerrieben
sind und ein Baumrindensubstrat bilden.

3. Material nach Anspruch 1 oder 2, dadurch g e k e n n -
z e i c h n e t , daß das Baumrindensubstrat mit den vorzugsweise natürlichen Düngemitteln etwa gleichmäßig vermengt und zu einem Körper vorbestimmter Gestalt verpreßt ist.

4. Material nach einem oder mehreren der Ansprüche 1 bis 3, dadurch g e k e n n z e i c h n e t , daß die Baumrinde bzw. Baumrindenstücke mindestens zweifach kompostiert sind.

5. Material nach einem oder mehreren der Ansprüche 1 bis 4, dadurch g e k e n n z e i c h n e t , daß es zusätzlich
- Kalk und
- phytophile, zumindest phytoneutrale Bindemittel enthält.

6. Material nach einem oder mehreren der Ansprüche 1 bis 5, dadurch g e k e n n z e i c h n e t , daß es als zusätzlichen Bestandteil Mineralwolle, insbesondere Steinwolle oder Schlackenwolle enthält.

7. Material nach einem oder mehreren der Ansprüche 1 bis 6, dadurch g e k e n n z e i c h n e t , daß als tierischer Kot Hühnerkot, vorzugsweise samenarmer Kükenkot zugemischt ist.

8. Material nach einem oder mehreren der Ansprüche 1 bis 7, dadurch g e k e n n z e i c h n e t , daß es Polyvinylacetat, Lignin, Abfallauge von der Celluloseherstellung, Stärke, Kaseinat und/oder Natriumsilikat bzw. Wasserglas als Bindemittel enthält.

9. Material nach einem oder mehreren der Ansprüche 1 bis 8, dadurch g e k e n n z e i c h n e t , daß es die nachstehende Zusammensetzung aufweist:

Kompostierte Rinde      50 - 90 Vol.-%, vorzugsweise etwa 75 Vol.-%

| Tierischer Kot | 45 - 7 Vol.-%, vorzugsweise |
| | etwa 15 Vol.-%, und |
| Kalk und Bindemittel | Rest, ca. 7 Vol.-%. |

10. Material nach Anspruch 9, dadurch g e k e n n - z e i c h n e t , daß es die folgende Zusammensetzung aufweist:

| Reine kompostierte Rinde | 50 - 90 Vol.-% |
| Mit/Kot angereicherte Rinde | 45 - 5 Vol.-% |
| Kalk und Bindemittel | Rest. |

Düngemittel, insbesondere

11. Material nach einem oder mehreren der Ansprüche 1 bis 10, dadurch g e k e n n z e i c h n e t , daß die Zusammensetzung von kompostierter Baumrinde und/tierischem Kot so gewählt ist, daß der Stickstoffgehalt (N-Gehalt) etwa 1,2 bis 2,8 %, vorzugsweise 1,5 bis 2,3 % beträgt.

Düngemittel, insbesondere

12. Material nach einem oder mehreren der Ansprüche 1 bis 11, dadurch g e k e n n z e i c h n e t , daß das Substrat Fasermasseabfälle, z.B. Cellulosefasern in feinen Fraktionen enthält, deren Menge 25 bis 45 Vol.-% des Substrates ausmacht.

13. Material nach einem oder mehreren der Ansprüche 1 bis 12, dadurch g e k e n n z e i c h n e t , daß die Baumrinde im Substrat teilweise oder ganz durch Torf ersetzt ist.

14. Verfahren zur Herstellung eines Materials nach einem oder mehreren der Ansprüche 1 bis 13, g e - k e n n z e i c h n e t durch folgende Verfahrens- schritte:

a) Kompostieren von Baumrinden von einer oder mehreren Gattungen, d.h. von Rinden von Laub- und/oder Nadelbäumen verschiedener Art;

b) Zerkleinern der kompostierten Baumrinden zu einem
Baumrindensubstrat; und

c) etwa gleichmäßiges Vermengen des Baumrindensubstrats
mit Düngemittel, insbesondere in Form von tierischem
Kot, vorzugsweise samenarmen Hühnerkot.

15. Verfahren nach Anspruch 14, dadurch g e k e n n -
z e i c h n e t , daß weitere Zusätze, wie
- Kalk
- phytophile, zumindest phytoneutrale Bindemittel und
gegebenenfalls
- Mineralwolle oder faserige Mineralstoffe, z.B. Mineralwollabfälle in feinen Fraktionen
zugemengt werden.

16. Verfahren nach Anspruch 14 oder 15, dadurch g e -
k e n n z e i c h n e t , daß 50 bis 90 Vol.-%, vorzugsweise etwa 75 Vol.-% kompostierte Rinde, 45 bis 7 Vol.-%,
vorzugsweise etwa 15 Vol.-% tierischer Kot und ein Rest
von ca. 7 Vol.-% an Kalk und Bindemitteln miteinander
vermengt werden.

17. Verfahren nach einem oder mehreren der Ansprüche 14
bis 16, dadurch g e k e n n z e i c h n e t , daß
50 bis 90 Vol.-% reine kompostierte Rinde, 45 bis 5 Vol.-%
mit Düngemittel, vorzugsweise
mit/Kot angereicherte Rinde und ein Rest von etwa 5
bis 10 Vol.-% Kalk und Bindemittel miteinander vermischt werden.

18. Verfahren nach einem oder mehreren der Ansprüche 14
bis 17, dadurch g e k e n n z e i c h n e t , daß das
kompostierte Baumrindensubstrat zunächst in trockenem
Zustand als Streu in einem Tierstall oder -käfig verteilt wird und daß das Substrat nach ausreichender
Bedeckung oder Beschichtung mit Kot und Einwirkung
des Kotes wieder gesammelt und mit reinem bzw. kotfreiem Baumrindensubstrat vorzugsweise in einem Verhältnis gemäß Anspruch 17 vermengt wird.

19. Verfahren nach einem oder mehreren der Ansprüche 14
bis 18, dadurch g e k e n n z e i c h n e t , daß die
Streuung von Baumrindensubstrat und Bedeckung mit Kot
nacheinander in mehreren Schichten durchgeführt wird.

20. Verfahren nach einem oder mehreren der Ansprüche 14
bis 19, dadurch g e k e n n z e i c h n e t , daß die
Einwirkung des Düngemittels, vorzugsweise /tierischen Kots auf das beim Einstreuen
oder Mischen trockene Baumrindensubstrat bei einer
Teilchengröße des Substrats von vorzugsweise 5 bis
10 mm etwa 3 bis 5 Wochen dauert.

21. Verfahren nach einem oder mehreren der Ansprüche 14
bis 20, dadurch g e k e n n z e i c h n e t , daß das
Material zu einem beständigen Formkörper vorbestimmter
Gestalt verpreßt wird, vorzugsweise unter Einwirkung
eines Druckes von etwa 100 bis 5000 kPa, so daß der
Formkörper eine Dichte von etwa 600 bis 900 kg/m³
aufweist.

22. Verfahren nach Anspruch 21, dadurch g e k e n n -
z e i c h n e t , daß flächige Formkörper in Form von
Platten oder dergl. hergestellt werden, deren Oberfläche mit Pflanzensamen, insbesondere Grassamen besetzt bzw. versehen wird.

23. Verfahren nach Anspruch 21, dadurch g e k e n n -
z e i c h n e t , daß in das Innere von kubischen,
insbesondere kugel- oder eiförmigen Formkörpern ein
oder mehrere Samenkörper, insbesondere Baum-, Busch-
oder andere Pflanzensamenkörner unter Bildung von
Samenkörpern eingeschlossen werden.

24. Formkörper, bestehend aus einem Material nach einem oder mehreren der Ansprüche 1 bis 13, bzw. hergestellt nach einem oder mehreren der Ansprüche 14 bis 23, dadurch g e k e n n z e i c h n e t , daß er die Gestalt

- einer geschlossenen oder mit einer oder mehreren Ausnehmungen bzw. Durchbrüchen versehenen Platte,
- eines Würfels,
- einer Kugel oder eines Eies,
- einer Pyramide oder eines Kegels,
- eines Sternes oder
- jede andere beliebige geometrische Form hat.

25. Verwendung eines Formkörpers nach Anspruch 24 als

- Grasplatte
- Abdeckplatte mit Düngeeffekt
- Nährkörper
- Düngeelement
- Pflanzkörper oder
- Samenkörper.

26. Verwendung des Materials nach einem oder mehreren der Ansprüche 1 bis 13 zur Verbesserung der Bodenqualität, insbesondere zur Langzeitdüngung.